# EUROPEAN PATENT APPLICATION

(11) **EP 4 810 777 A1**
(43) Date of publication of application: **23.09.2026**
(21) Application number: 25164653.5
(22) Date of filing: 19.03.2025
(51) Int. Cl.: F02C 3/22, F02C 9/40

(54) **PROCESS FOR GENERATING ELECTRICITY**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: PAGES, Baptiste, Chuo-ku Kobe, 651-0087 (JP)
(74) Representative: Air Liquide

(57) **Abstract**

The invention relates to a process for generating electricity with an electricity generator (1) with a fast load change rate, for instance at a rate of 10% per minute, the process comprising the following steps:
- feeding the electricity generator (1) with a fuel mixture comprising at least two different fuels, including:
∘ a first fuel (F1);
∘ a second fuel (F2) comprising hydrogen produced by a gas conversion unit (2), said gas conversion unit (2) operating with a slow load change rate, for instance at a rate of 1% per minute;

- in case of a load change of the electricity generator (1), compensating for the slow load change rate of the gas conversion unit (2) by adjusting the flow rate of the first fuel (F1) to match a load demand of the electricity generator (1).

## Description

The present invention relates to the field of electricity generation, in particular with hydrogen as a fuel in gas turbines.

The energy transition toward low-carbon energy sources requires the development of electricity generation with alternative fuels. Hydrogen is a potential alternative fuel due to its high energy potential and low carbon footprint. Hydrogen is typically produced by gas reforming. Ammonia, as a hydrogen carrier, is being utilized for hydrogen transportation and storage.

For instance, ammonia is cracked to produce hydrogen, which is then co-fired with natural gas in gas turbines to generate electricity. Gas turbines offer rapid response to load changes, with load change rates of approximately 10% per minute for instance. In contrast, the gas reforming units exhibit slower load change rates, for instance around 1% per minute. This discrepancy between the fast load change rate of gas turbines and the slower load change rate of gas reforming units presents a drawback in using hydrogen as a fuel.

Existing solutions involve the use of pressurized hydrogen gas buffer tanks. A pressurized hydrogen gas buffer tank is placed between the gas reforming unit and the gas turbine. Excess hydrogen is stored in this buffer tank during the ramp-down of the gas turbine and released during its ramp-up. This solution is expensive (additional buffer tank and hydrogen compression to supply the tank) and adds complexity to the plant (increased footprint, large inventory of flammable gas).

The invention aims to overcome these drawbacks.

For this purpose, the invention proposes a process for generating electricity with an electricity generator with a fast load change rate, for instance at a rate of 10% per minute, the process comprising the following steps:
- feeding the electricity generator with a fuel mixture comprising at least two different fuels, including:
   ∘ a first fuel;
   ∘ a second fuel comprising hydrogen produced by a gas conversion unit, said gas conversion unit operating with a slow load change rate, for instance at a rate of 1% per minute;
- in case of a load change of the electricity generator, compensating for the slow load change rate of the gas conversion unit by adjusting the flow rate of the first fuel to match a load demand of the electricity generator.

"Fast load change rate" and "slow load change rate" means that the electricity generator has a higher responsiveness to load change than the gas conversion unit. For example, the electricity generator may adjust load at 10% per minute, faster than the gas conversion unit at 1% per minute.

For instance, the fast load change rate is at least 5% per minute, preferably at least 10% per minute, preferably at least 15% per minute, for an electricity generator.

For instance, the slow load change rate is at most 1% per minute for a gas conversion unit.

By obviating the need for pressurized hydrogen buffer tanks and associated compression systems, the invention simplifies the plant construction and reduces operational complexity.

The dynamic adjustment of fuel flow rates, including natural gas and hydrogen for instance, ensures that varying load demands of the electricity generator can be reached.

By enabling efficient co-firing of hydrogen derived from ammonia cracking for instance, the invention enables a low-carbon footprint.

The invention also ensures that the whole hydrogen produced by the gas conversion unit (e.g. ammonia cracker) is utilized in the gas turbine, preventing any wastage or release of hydrogen into the atmosphere. This contributes to operational efficiency.

In one embodiment, the electricity generator is fed with the flow rate of the first fuel higher than a flow rate of the second fuel during a nominal operating phase. Preferably, said flow rate of the first fuel is at least twice the flow rate of the second fuel.

In one embodiment, during a first step of a ramp-down (or turned down) of the electricity generator load, the flow rate of the first fuel is decreased proportionally to the ramp-down of the electricity generator load or more, for example to a lower flow rate value below the flow rate of the second fuel, in particular until the gas conversion unit load matches the load demand of the electricity generator. Advantageously, in a subsequent step of the ramp-down, the flow rate of the first fuel is increased, for example to a value above the flow rate of the second fuel. The flow rate of the second fuel may be decreased as well during said first and/or said subsequent step of the ramp-down. In particular, the flow rate of the second fuel is decreased slower than the flow rate of the first fuel during said first step of the ramp-down.

For instance, the flow change rate is at least 5% per minute for an electricity generator.

For instance, the slow change rate is at most 1% per minute for a gas conversion unit.

In one embodiment, during a first step of an increase (or ramp-up) of the electricity generator load, the flow rate of the first fuel is increased proportionally to the ramp-up of the electricity generator load or more, in particular until the gas conversion unit load matches the load demand of the electricity generator. Advantageously, in a subsequent step of the ramp-up, the flow rate of the first fuel is decreased. The flow rate of the second fuel may be increased as well during said first and/or said subsequent step of the ramp-up. In particular, the flow rate of the second fuel is increased slower than the flow rate of the first fuel during said first step of the ramp-down.

In one embodiment, the electricity generator is a gas turbine.

In one embodiment, the electricity generator may comprise a fuel cell, such as a solid oxide fuel cell, or a boiler.

In one embodiment, the first fuel is a hydrocarbon fuel, in particular natural gas, for example natural gas supplied from a natural gas network or vaporized liquefied natural gas.

In one embodiment, the first fuel is ammonia.

In one embodiment, the process comprises the step of generating electricity with a gas turbine as said electricity generator receiving said fuel mixture that includes, for instance, hydrogen and natural gas or methane.

In one embodiment, the gas turbine is configured for dynamic operation, changing load over time.

In one embodiment, the gas conversion unit is an ammonia cracking unit or a reformer.

In one embodiment, said hydrogen is produced by the ammonia cracking unit, where ammonia is cracked into hydrogen and nitrogen, in particular followed by nitrogen removal (in particular by pressure swing adsorption).

In one embodiment, said hydrogen is produced by the reformer by hydrocarbon reforming, such as steam methane reforming (SMR) or auto-thermal reforming (ATR), which produces a hydrogen-containing syngas.

In one embodiment, the reformer may be a steam methane reformer (SMR) that uses steam and methane to produce hydrogen-containing syngas.

In one embodiment, the reformer may be an auto-thermal reformer (ATR) that combines partial oxidation and endothermic reforming in a single reactor.

In one embodiment, the reformer or the ammonia cracking unit may comprise a tubular reformer that utilizes externally heated tubes to carry out an endothermic reaction.

In one embodiment, the synthesis gas produced by the reformer may comprise CO and/or CO₂ in addition to H₂.

In one embodiment, the reformer or the ammonia cracking unit is associated with a carbon capture system, such as a pressure swing adsorber PSA (PSA for Pressure Swing Adsorption), cryogenic carbon capture, and/or amine scrubbing, for recovering a CO2-enriched stream.

In one embodiment, the process comprises a step of recovering hydrogen from the synthesis gas or from a gas derived therefrom, for example by pressure swing adsorption, for producing said second fuel and an offgas enriched in CO2.

In one embodiment, the process comprises a step of recovering said CO2-enriched stream from the offgas using said carbon capture system.

In one embodiment, the process comprises a step of recovering CO2-enriched stream from a flue gas generated by the reformer or by the ammonia cracking unit.

In one embodiment, the fuel mixture sent to the electricity generator has a variable hydrogen-to-hydrocarbon ratio.

In one embodiment, this ratio is adjusted to achieve a nominal operation of the electricity generator, in particular below a pre-determined carbon intensity value (or a predetermined emission value) of the electricity generator.

In one embodiment, this ratio is adjusted dynamically to achieve a nominal operation of the electricity generator, in particular to reach an optimal operation of the generator, particularly with respect to combustion stability.

In one embodiment, the process comprises increasing the load of the electricity generator and decreasing the hydrogen-to-hydrocarbon fuel ratio by increasing the flow rate of hydrocarbon fuel (in particular natural gas) as the first fuel, thereby operating the electricity generator above said pre-determined carbon intensity value. The load of the electricity generator is advantageously increased to meet an increased load demand of the electricity generator. The process may comprise a following step of increasing the hydrogen-to-natural gas ratio by increasing the flow rate of the second fuel, such as to operate the electricity generator below said pre-determined carbon intensity value. In particular, the step of increasing the hydrogen-to-natural gas ratio is performed until said pre-determined carbon intensity value is met. Said step of increasing the hydrogen-to-natural gas ratio can be performed once the increased load demand of the electricity generator is met.

Advantageously increasing the hydrogen proportion in the fuel mixture reduces the carbon intensity of electricity generation.

Advantageously the process allows dynamic management of the enthalpic energy of the fuel mixture.

In one embodiment, the process comprises increasing the load of the electricity generator and decreasing a hydrogen-to-ammonia ratio by increasing the flow rate of ammonia as the first fuel, thereby operating the electricity generator above a pre-determined NOx emission value. The load of the electricity generator is advantageously increased to meet an increased load demand. In particular, the process comprises a following step of increasing the hydrogen-to-ammonia ratio by increasing the flow rate of the second fuel (i.e., hydrogen), such as to operate the electricity generator below said pre-determined NOx emission value. In particular, the step of increasing the hydrogen-to-ammonia ratio is performed until said pre-determined NOx emission value is met. Said step of increasing the hydrogen-to-ammonia ratio can be performed once the increased load demand is met. This allows meeting the pre-determined (maximum) NOx emission value while avoiding excessive amounts of ammonia fueling the generator, and while ensuring optimal combustion stability.

In one embodiment, the electricity generator, for example said gas turbine, is configured to transition between different operating phases (in particular high-load and low-load phases) to adjust an electricity output matching said load demand.

In one embodiment, to manage load changes, the enthalpic energy of the fuel mixture to the electricity generator is adjusted.

In one embodiment, these operating phases include nominal operating phases and transitions where the fuel mixture composition changes.

In one embodiment, during an increase in load, the flow rate of the first fuel (in particular natural gas) is increased immediately to meet demand.

Advantageously fast adjustments to natural gas flow rates compensate for hydrogen production delays during transitions in the gas conversion unit.

In one embodiment, a load ramp-down triggers a reduction in natural gas flow, together with a hydrogen production reduction by a change in the operation of the gas conversion unit.

In a variant, a load ramp-down triggers a reduction in natural gas flow, without hydrogen production reduction, and the operation of the gas conversion unit is maintained constant.

In one embodiment, said hydrogen is produced by the gas conversion unit by converting a feedstock. Said feedstock may comprise a hydrocarbon fuel, in particular natural gas, for example for example natural gas supplied from a natural gas network or vaporized liquefied natural gas. Said feedstock may alternatively comprise ammonia. A portion of the feedstock (in particular ammonia) may bypass the gas conversion unit and supply as the first fuel in the fuel mixture the electricity generator.

In one embodiment, the molar flow rate ratio of the first fuel to the second fuel in the fuel mixture is between 0.1 and 10.

In one embodiment, the process comprises operating the generator in a nominal operating phase with said fuel mixture comprising between 95%mol and 50%mol of natural gas as the first fuel and between 5%mol and 50%mol of hydrogen.

In one embodiment, the enthalpic energy of the fuel mixture is adjusted using a third component, which may comprise an inert gas. The third component may for example be pure nitrogen or combustion air.

In one embodiment, a third component is introduced into the fuel mixture to stabilize the volumetric or mass flow rate during rapid load changes of the electricity generator.

In one embodiment, the load change rate of the electricity generator is between 5 and 10 times faster than the load change rate of the gas conversion unit.

In one embodiment, a ramp-down phase of the electricity generator is anticipated by reducing the hydrogen production rate of the gas conversion unit in advance to align with the reduced load demand. In particular, the load of the gas conversion unit is first reduced to the targeted electricity generator reduced load thus reducing said hydrogen production rate and then reducing the flow rate of the first fuel.

In one embodiment, the fuel mixture is modified from substantially 30% hydrogen by volume to substantially 100% hydrogen by volume during a ramp-down phase of the electricity generator.

In one embodiment, the entirety of the hydrogen produced by the gas conversion unit is directed to the fuel mixture to avoid wastage or venting of hydrogen.

In one embodiment, the first fuel is natural gas, and the second fuel is hydrogen produced by ammonia cracking.

In one embodiment, the ammonia cracker operates with a load change rate of substantially 90 minutes to transition between 100% and 10% load.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

### BRIEF DESCRIPTION OF DRAWINGS

Note that all of the features and configurations described above are purely examples. Other features, details and advantages of the invention will become clearer on reading the detailed description set out below, together with several embodiments provided purely as examples and by way of indication, with reference to the attached schematic drawings, in which:
Figure 1 shows the components for implementing a process according to an embodiment of the invention;
Figure 2 includes the following diagrams:
   - Diagram D2a: Ramp-down with ammonia cracker and gas turbine load lines
   - Diagram D2b: Ramp-up with ammonia cracker and gas turbine load lines
   - Diagram D2c: Ramp-down with fuel flow rates lines
   - Diagram D2d: Ramp-up with fuel flow rates lines.

Throughout the description, identical elements or elements with the same function are designated by the same reference sign.

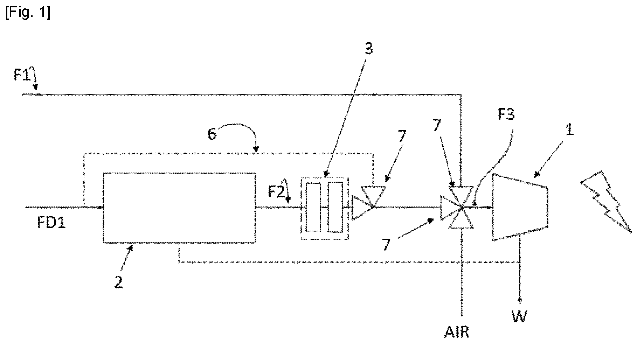

A process for generating electricity according to an embodiment of the invention is described in connection with Figure 1 which shows the components for implementing the process.

The process for generating electricity utilizes an electricity generator 1 with a fast load change rate, for instance at a rate of 10% per minute.

The process comprises the following steps:
- feeding the electricity generator 1 with a fuel mixture F3 comprising at least two different fuels, including:
   ∘ a first fuel F1;
   ∘ a second fuel F2 comprising hydrogen produced by a gas conversion unit 2, said gas conversion unit 2 operating with a slow load change rate, for instance at a rate of 1% per minute;
- in case of a load change of the electricity generator 1, compensating for the slow load change rate of the gas conversion unit 2 by adjusting the flow rate of the first fuel F1 to match a load demand of the electricity generator 1.

"Fast load change rate" and "slow load change rate" means that the electricity generator 1 has a higher responsiveness to load change than the gas conversion unit 2. For example, the electricity generator 1 may adjust load at 10% per minute, faster than the gas conversion unit 2 at 1% per minute.

For instance, the fast load change rate is at least 5% per minute for the electricity generator 1.

For instance, the slow load change rate is at most 1% per minute for the gas conversion unit 2.

In the present embodiment, the electricity generator 1 is a gas turbine. In a variant, the electricity generator 1 may comprise a fuel cell, such as a solid oxide fuel cell, or a boiler.

The first fuel F1 is natural gas, in particular supplied from a natural gas network or vaporized liquefied natural gas.

The process comprises the step of generating electricity with a gas turbine as said electricity generator 1 receiving said fuel mixture F3 that includes, for instance, hydrogen and natural gas or methane.

The gas turbine is configured for dynamic operation, changing load over time.

The gas conversion unit 2 is an ammonia cracking unit.

Said hydrogen is produced by the ammonia cracking unit 2 by ammonia cracking, where ammonia (feed FD1 in figure 1) is cracked into hydrogen and nitrogen, in particular followed by nitrogen removal (in particular by pressure swing adsorption PSA 3).

In the case the gas conversion unit 2 is a steam methane reformer (SMR), the gas conversion unit 2 may be associated with a carbon capture system, such as a pressure swing adsorber PSA (PSA for Pressure Swing Adsorption), cryogenic carbon capture, and/or amine scrubbing, for recovering a CO2-enriched stream.

In one embodiment, the process comprises a step of recovering CO2 from the PSA offgas using a carbon capture system.

The flow rates of the respective fuels are regulated by adjusting the corresponding valves 7. Air is provided to the gas turbine through line AIR, as shown in figure 1. The waste gas from the gas conversion unit 2 and exhaust gas from the electricity generator 1 are discharged (see line W).

During a ramp-down of the electricity generator load, the flow rate of the first fuel F1 is decreased faster than the flow rate of the second fuel F2, in particular until the gas conversion unit load matches the load demand of the electricity generator 1.

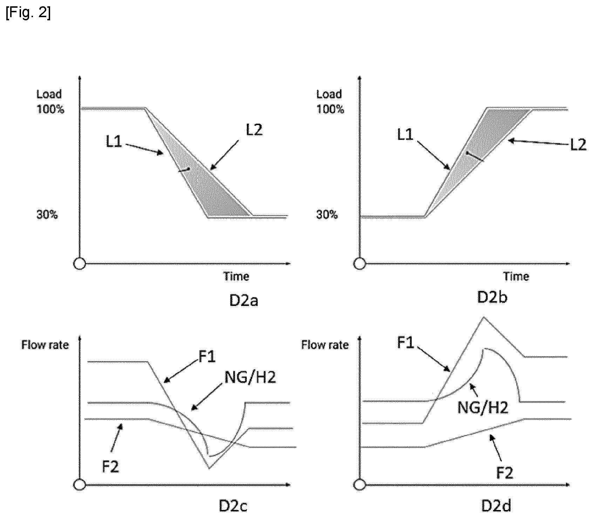

Diagram D2a of figure 2 illustrates the ammonia cracker 2 load (line L2) and the gas turbine 1 load (line L1) during a ramp-down situation. The x-axis represents time, while the y-axis represents load as a percentage.

Diagram D2c of Figure 2 illustrates the transition of fuel sources during the ramp-down, specifically highlighting the shift from natural gas (F1) to hydrogen (F2) as the load decreases. As the load decreases, the fuel mix shifts towards a higher proportion of hydrogen, as shown by the decreasing NG/H2 ratio (line NG/H2). The x-axis represents time, while the y-axis represents flow rate.

For instance, the flow change rate is at least 5% per minute for an electricity generator 1.

For instance, the slow change rate is at most 1% per minute for a gas conversion unit 2.

During an increase (or ramp-up) of the electricity generator load, the flow rate of the first fuel F1 is increased faster than the flow rate of the second fuel F2, in particular until the gas conversion unit load matches the load demand of the electricity generator 1, as illustrated in diagrams D2b and D2d in figure 2.

The fuel mixture F3 sent to the electricity generator 1 can have a variable hydrogen-to-natural gas ratio (see diagrams D2c and D2d).

This ratio is adjusted dynamically to achieve a nominal operation of the electricity generator 1, in particular below a pre-determined carbon intensity value (or a predetermined emission value) of the electricity generator 1.

This ratio is adjusted dynamically to achieve a nominal operation of the electricity generator 1, in particular to reach an optimal operation of the generator 1, particularly with respect to combustion stability.

The process may comprise increasing the load of the electricity generator 1 and decreasing the hydrogen-to-hydrocarbon fuel (in particular natural gas) ratio by increasing the flow rate of natural gas as the first fuel F1, thereby operating the electricity generator 1 above said pre-determined carbon intensity value. The load of the electricity generator 1 is increased to meet an increased load demand of the electricity generator 1. In particular, the process comprises a following step of increasing the hydrogen-to-natural gas ratio by increasing the flow rate of the second fuel F2, such as to operate the electricity generator 1 below said pre-determined carbon intensity value. In particular, the step of increasing the hydrogen-to-natural gas ratio is performed until said pre-determined carbon intensity value is met. Said step of increasing the hydrogen-to-natural gas ratio can be performed once the increased load demand of the electricity generator 1 is met.

Advantageously increasing the hydrogen proportion in the fuel mixture F3 reduces the carbon intensity of electricity generation.

Advantageously the process allows dynamic management of the enthalpic energy of the fuel mixture F3.

In one embodiment, the process comprises increasing the load of the electricity generator 1 and decreasing a hydrogen-to-ammonia ratio by increasing the flow rate of ammonia as the first fuel F1, thereby operating the electricity generator 1 above a pre-determined NOx emission value. The load of the electricity generator 1 is increased to meet an increased load demand. In particular, the process comprises a following step of increasing the hydrogen-to-ammonia ratio by increasing the flow rate of the second fuel F2 (i.e., hydrogen), such as to operate the electricity generator 1 below said pre-determined NOx emission value. In particular, the step of decreasing the hydrogen-to-ammonia ratio is performed until said pre-determined NOx emission value is met. Said step of increasing the hydrogen-to-ammonia ratio can be performed once the increased load demand is met. This allows meeting the pre-determined (maximum) NOx emission value while avoiding excessive amounts of ammonia fueling the generator 1, and while ensuring optimal combustion stability.

The electricity generator 1, such as a gas turbine, is configured to transition between different operating phases (in particular high-load and low-load phases) to adjust an electricity output matching said load demand.

To manage load changes, the enthalpic energy of the fuel mixture F3 to the electricity generator 1 is dynamically adjusted.

These operating phases include nominal operating phases and transitions where the fuel mixture composition changes dynamically.

During an increase in load, the flow rate of the first fuel F1 (in particular natural gas) is increased immediately to meet demand.

Advantageously fast adjustments to natural gas flow rates compensate for hydrogen production delays during transitions in the gas conversion unit 2.

In one embodiment, a load ramp-down triggers a reduction in natural gas flow, together with a hydrogen production reduction by a change in the operation of the gas conversion unit 2.

In a variant, a load ramp-down triggers a reduction in natural gas flow, without hydrogen production reduction, and the operation of the gas conversion unit 2 is maintained constant.

A portion of the feedstock (in particular ammonia) may bypass the gas conversion unit 2 (through a bypass 6 illustrated in figure 1) and directly supply as the first fuel, the fuel mixture F3 for the electricity generator 1.

The molar flow rate ratio of the first fuel F1 to the second fuel F2 in the fuel mixture F3 is between 0.1 and 10.

In one embodiment, the process comprises operating the generator 1 in a nominal operating phase with said fuel mixture F3 comprising between 5%mol and 50%mol of hydrogen and between 95%mol and 50%mol of natural gas as the first fuel F1.

In one embodiment, the enthalpic energy of the fuel mixture F3 is adjusted using a third component, which may comprise an inert gas. The third component may for example be pure nitrogen or a combustion air.

In one embodiment, a third component is introduced into the fuel mixture F3 to stabilize the volumetric or mass flow rate during rapid load changes of the electricity generator 1.

In one embodiment, the load change rate of the electricity generator 1 is between 5 and 10 times faster than the load change rate of the gas conversion unit 2.

In one embodiment, a ramp-down phase of the electricity generator 1 is anticipated by reducing the hydrogen production rate of the gas conversion unit 2 in advance to align with the reduced load demand. In particular, the load of the gas conversion unit 2 is first reduced to the targeted electricity generator reduced load, thus reducing said hydrogen production rate and then reducing the flow rate of the first fuel F1.

In one embodiment, the fuel mixture F3 is modified from substantially 30% hydrogen by volume to substantially 100% hydrogen by volume during a ramp-down phase of the electricity generator 1.

In one embodiment, the ammonia cracker operates with a load change rate of substantially 90 minutes to transition between 100% and 10% load
In a variant, the gas conversion unit 2 is a reformer.

In one embodiment, said hydrogen is produced by the reformer by hydrocarbon reforming, such as steam methane reforming (SMR) or auto-thermal reforming (ATR), which produce a hydrogen-rich syngas.

In one embodiment, the reformer may be a steam methane reformer (SMR) that uses steam and methane to produce hydrogen-rich syngas. In one embodiment, the reformer may be an auto-thermal reformer (ATR) that combines partial oxidation and endothermic reforming in a single reactor. In one embodiment, the reformer may be a tubular reformer that utilizes externally heated tubes to carry out an endothermic reaction. In one embodiment, the synthesis gas produced by the reformer may comprise CO and/or CO₂ in addition to H₂.

## Claims

1. Process for generating electricity with an electricity generator (1) with a fast load change rate, for instance at a rate of 10% per minute, the process comprising the following steps:
- feeding the electricity generator (1) with a fuel mixture comprising at least two different fuels, including:
∘ a first fuel (F1);
∘ a second fuel (F2) comprising hydrogen produced by a gas conversion unit (2), said gas conversion unit (2) operating with a slow load change rate, for instance at a rate of 1% per minute;
- in case of a load change of the electricity generator (1), compensating for the slow load change rate of the gas conversion unit (2) by adjusting the flow rate of the first fuel (F1) to match a load demand of the electricity generator (1).

2. Process according to claim 1, wherein the electricity generator (1) is fed with the flow rate of the first fuel (F1) higher than a flow rate of the second fuel (F2) during a nominal operating phase, preferably said flow rate of the first fuel (F1) is at least twice the flow rate of the second fuel (F2).

3. Process according to any one of the preceding claims, comprising operating the generator in a nominal operating phase with said fuel mixture comprising between 95%mol and 50%mol of natural gas as the first fuel and between 5%mol and 50%mol of hydrogen.

4. Process according to any one of the preceding claims, wherein during a first step of a ramp-down or turned down of the electricity generator (1) load, the flow rate of the first fuel (F1) is decreased proportionally to the ramp-down of the electricity generator (1) load or more, until the gas conversion unit (2) load matches the load demand of the electricity generator (1), and in a subsequent step of the ramp-down the flow rate of the first fuel (F1) is increased.

5. Process according to any one of the preceding claims, wherein during a first step of an increase (or ramp-up) of the electricity generator (1) load, the flow rate of the first fuel (F1) is increased proportionally to the ramp-up of the electricity generator (1) load or more, until the gas conversion unit (2) load matches the load demand of the electricity generator (1), and in a subsequent step of the ramp-up the flow rate of the first fuel (F1) is decreased.

6. Process according to any one of the preceding claims, wherein the electricity generator (1) is a gas turbine.

7. Process according to any one of claims 1 to 5, wherein the electricity generator (1) comprises a fuel cell, such as a solid oxide fuel cell, or a boiler.

8. Process according to any one of the preceding claims, wherein the first fuel (F1) is a hydrocarbon fuel, in particular natural gas.

9. Process according to any one of claims 1 to 7, wherein the first fuel (F1) is ammonia.

10. Process according to any one of the preceding claims, wherein the gas conversion unit (2) is an ammonia cracking unit and said hydrogen is produced by the ammonia cracking unit, where ammonia is cracked into hydrogen and nitrogen.

11. Process according to any one of claims 1 to 9, wherein the gas conversion unit (2) is a reformer and said hydrogen is produced by the reformer by hydrocarbon reforming which produces a hydrogen-containing syngas.

12. Process according to claim 11, wherein the reformer is associated with a carbon capture system for recovering a CO2-enriched stream.

13. Process according to any one of the preceding claims, wherein the fuel mixture sent to the electricity generator (1) has a variable hydrogen-to-hydrocarbon ratio and this ratio is adjusted to achieve a nominal operation of the electricity generator (1) below a pre-determined carbon intensity value of the electricity generator (1).

14. Process according to claim 13, wherein the process comprises increasing the load of the electricity generator (1) and decreasing the hydrogen-to-hydrocarbon fuel ratio by increasing the flow rate of hydrocarbon fuel as the first fuel (F1), thereby operating the electricity generator (1) above said pre-determined carbon intensity value.

15. Process according to any one of claims 1 to 13, wherein the process comprises increasing the load of the electricity generator (1) and decreasing a hydrogen-to-ammonia ratio by increasing the flow rate of ammonia as the first fuel (F1), thereby operating the electricity generator (1) above a pre-determined NOx emission value.
